# EUROPEAN PATENT APPLICATION

(11) **EP 4 488 554 A1**
(43) Date of publication of application: **08.01.2025**
(21) Application number: 24755827.3
(22) Date of filing: 04.01.2024
(51) Int. Cl.: F16K 11/22, F16K 37/00, F16K 31/02, C02F 1/30, G05D 23/00

(54) **FAUCET WATER OUTPUT CONTROL METHOD AND CONTROL SYSTEM, AND STORAGE MEDIUM**

(30) Priority: 16.02.2023 CN 202310132528
(71) Applicant: Bisource Hardware Manufacturing Co., Ltd., Jiangmen, Guangdong 529000 (CN)
(72) Inventor: HUANG, Weiqiang, Jiangmen, Guangdong 529000 (CN)
(74) Representative: Boco IP Oy Ab
(86) International application number: PCT/CN2024/070605
(87) International publication number: WO 2024/169451

(57) **Abstract**

A faucet water discharge control method, a faucet water discharge control system, and a storage medium are disclosed. The faucet water discharge control method includes: when a water discharge control instruction that includes a target temperature value is received, determining a target hot water flow rate and a target cold water flow rate based on the target temperature value, controlling valve opening of a first valve based on the target hot water flow rate, controlling valve opening of a second valve based on the target cold water flow rate, acquiring a reference temperature value sent by a temperature sensor, and controlling on/off state of a third valve based on the target temperature value and the reference temperature value so that the difference between the reference temperature value and the target temperature value is within an error range, avoiding excessively hot water discharge and reducing the risk of scalding. Compared with the technical solution in the related art that the inflow time of hot and cold water is controlled based on a preset water temperature value and the hot and cold water flows out directly after being mixed, the reliability of faucet water discharge can be effectively improved.

## Description

### TECHNICAL FIELD

The present disclosure relates to, but is not limited to, the technical field of smart kitchen and bathroom, and in particular, to a faucet water discharge control method, a faucet water discharge control system, and a storage medium.

### BACKGROUND

Faucets are an essential part of home decoration, allowing users to adjust water temperature without the need to mix hot and cold water manually. This eliminates the need to adjust water temperature with seasonal changes, significantly enhancing the convenience of water usage and simplifying household water management. In related art, faucets control the inflow time of hot and cold water based on a preset water temperature value, and then the hot and cold water flows out directly after being mixed. When the hot and cold water supply fails, there is a risk of scalding, which detracts from the user experience.

### SUMMARY

The embodiments of the present disclosure provide a faucet water discharge control method, a faucet water discharge control system, and a storage medium. The reliability of faucet water discharge can be effectively improved.

In a first aspect, an embodiment of the present disclosure provides a faucet water discharge control method, applied to a control processing module of the faucet water discharge control system. The faucet water discharge control system further includes a temperature control valve assembly including a hot water inlet, a cold water inlet, a mixing chamber and a water outlet, where the mixing chamber is connected to the hot water inlet, the cold water inlet and the water outlet respectively, the hot water inlet is provided with a first valve, the cold water inlet is provided with a second valve, and the mixing chamber is provided with a temperature sensor and a third valve. The faucet water discharge control method includes:
when a water discharge control instruction that includes a target temperature value is received, determining a target hot water flow rate and a target cold water flow rate based on the target temperature value;
controlling valve opening of the first valve based on the target hot water flow rate;
controlling valve opening of the second valve based on the target cold water flow rate;
acquiring a reference temperature value sent by the temperature sensor; and
controlling on/off state of the third valve based on the target temperature value and the reference temperature value.

The faucet water discharge control method according to the embodiment in the first aspect of the present disclosure has at least the following beneficial effects. In the faucet water discharge control method applied to the control processing module of the faucet water discharge control system, when a water discharge control instruction that includes a target temperature value is received, a target hot water flow rate and a target cold water flow rate are determined based on the target temperature value, so that the valve opening of the first valve is controlled based on the target hot water flow rate and the valve opening of the second valve is controlled based on the target cold water flow rate, so that hot water and cold water can be mixed in a certain proportion to reach the target temperature value. A reference temperature value sent by a temperature sensor is acquired, so that the water temperature in the mixing chamber is monitored in real time. The on/off state of the third valve is controlled based on the target temperature value and the reference temperature value, so that the difference between the reference temperature value and the target temperature value is within an error range, avoiding excessively hot water discharge and reducing the risk of scalding. Compared with the technical solution in the related art that the inflow time of hot and cold water is controlled based on a preset water temperature value and the hot and cold water flows out directly after being mixed, the reliability of faucet water discharge can be effectively improved.

According to some embodiments in the first aspect of the present disclosure, the controlling on/off state of the third valve based on the target temperature value and the reference temperature value includes: controlling the third valve to be turned off when the reference temperature value is greater than a preset temperature threshold.

According to some embodiments in the first aspect of the present disclosure, after controlling the third valve to be turned off when the reference temperature value is greater than a preset temperature threshold, the faucet water discharge control method further includes:
generating temperature abnormality information according to the reference temperature value; and
displaying the temperature abnormality information in a preset application interface.

According to some embodiments in the first aspect of the present disclosure, the hot water inlet is further provided with a first temperature sensor, and the cold water inlet is further provided with a second water pressure sensor. The faucet water discharge control method further includes:
acquiring a hot water temperature value sent by the first temperature sensor;
acquiring a cold water pressure value sent by the second water pressure sensor;
generating abnormality information when the hot water temperature value and/or the cold water pressure value are less than preset thresholds; and
displaying the abnormality information in a preset application interface.

According to some embodiments in the first aspect of the present disclosure, the faucet water discharge control method further includes: when the cold water pressure value is less than a preset water pressure threshold, controlling the second valve to be turned off.

According to some embodiments in the first aspect of the present disclosure, the faucet water discharge control method further includes:
acquiring a first duration, the first duration representing a duration during which the third valve is in an off state; and
when the first duration reaches a preset first time threshold, controlling the third valve to be turned on for a preset second duration.

According to some embodiments in the first aspect of the present disclosure, an inner wall of the mixing chamber is provided with multiple sterilization lamp beads. The faucet water discharge control method further includes: when a sterilization control instruction is received, controlling the multiple sterilization lamp beads to be lighted up.

According to some embodiments in the first aspect of the present disclosure, the faucet water discharge control method further includes:
acquiring a third duration, the third duration representing a duration during which the third valve is in an on state; and
when the third duration reaches a preset second time threshold, controlling the third valve to be turned off.

In a second aspect, an embodiment of the present disclosure provides a faucet water discharge control system, including: a memory, a processor, and a computer program stored in the memory and executable on the processor, where the computer program, when executed by the processor, causes the processor to implement the faucet water discharge control method as described in the first aspect.

In a third aspect, an embodiment of the present disclosure further provides a computer-readable storage medium that stores computer-executable instructions for causing a computer to execute the faucet water discharge control method as described in the first aspect.

### BRIEF DESCRIPTION OF DRAWINGS

FIG. 1 is a flowchart of a faucet water discharge control method provided by an embodiment of the present disclosure;
FIG. 2 is a flowchart of controlling the on/off state of a third valve provided by another embodiment of the present disclosure;
FIG. 3 is a flowchart of a faucet water discharge control method provided by another embodiment of the present disclosure;
FIG. 4 is a flowchart of a faucet water discharge control method provided by another embodiment of the present disclosure;
FIG. 5 is a flowchart of a faucet water discharge control method provided by another embodiment of the present disclosure;
FIG. 6 is a flowchart of a faucet water discharge control method provided by another embodiment of the present disclosure;
FIG. 7 is a flowchart of a faucet water discharge control method provided by another embodiment of the present disclosure;
FIG. 8 is a flowchart of a faucet water discharge control method provided by another embodiment of the present disclosure; and
FIG. 9 is a schematic diagram of a faucet water discharge control system provided by another embodiment of the present disclosure.

### DETAILED DESCRIPTION

In order to make the purpose, technical solutions and advantages of the present disclosure more clear, the present disclosure will be further described in detail below in conjunction with the accompanying drawings and embodiments. It is to be understood that the specific embodiments described here are merely used to explain the present disclosure and not to limit the present disclosure.

It will be understood that although the functional modules are divided in the device schematic diagram and the logical sequence is shown in the flowcharts, in some cases, the device may have different module division, or the steps shown or described may be performed in a different order than the sequence in the flowcharts. The terms "first", "second", etc. in the description, claims or the above accompanying drawings are used to distinguish similar objects and are not necessarily used to describe a specific order or sequence.

The present disclosure provides a faucet water discharge control method, a faucet water discharge control system, and a storage medium. The faucet water discharge control method is applied to a control processing module of the faucet water discharge control system. In the faucet water discharge control method, when a water discharge control instruction that includes a target temperature value is received, a target hot water flow rate and a target cold water flow rate are determined based on the target temperature value, so that the valve opening of the first valve is controlled based on the target hot water flow rate and the valve opening of the second valve is controlled based on the target cold water flow rate, so that hot water and cold water can be mixed in a certain proportion to reach the target temperature value. A reference temperature value sent by a temperature sensor is acquired, so that the water temperature in the mixing chamber is monitored in real time. The on/off state of the third valve is controlled based on the target temperature value and the reference temperature value, so that the difference between the reference temperature value and the target temperature value is within an error range, avoiding excessively hot water discharge and reducing the risk of scalding. Compared with the technical solution in the related art that the inflow time of hot and cold water is controlled based on a preset water temperature value and the hot and cold water flows out directly after being mixed, the reliability of faucet water discharge can be effectively improved.

The embodiments of the present disclosure will be further described below in conjunction with the accompanying drawings.

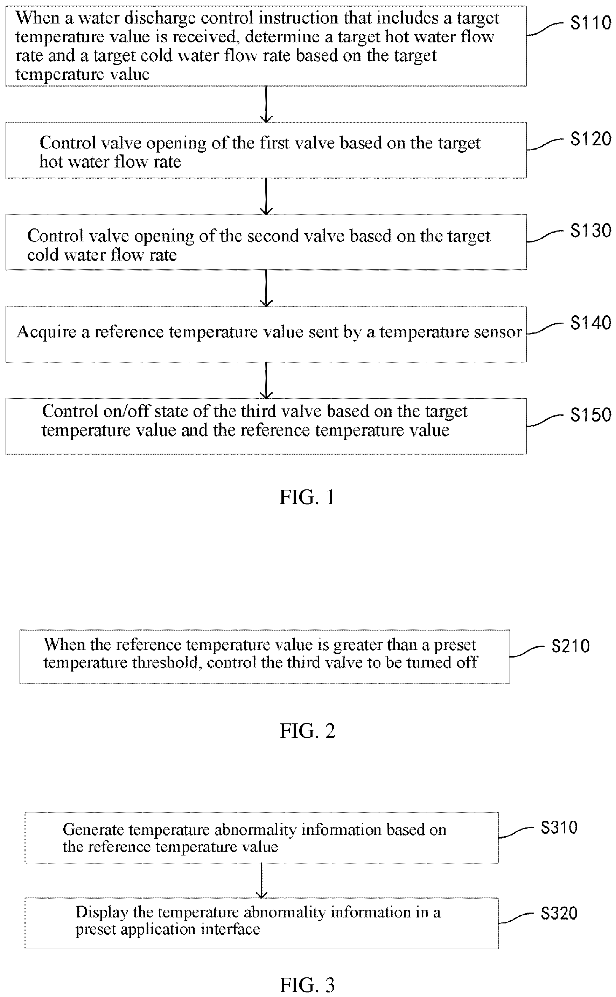

Referring to FIG. 1 showing a flowchart of a faucet water discharge control method provided by an embodiment of the present disclosure, the faucet water discharge control method is applied to a control processing module of the faucet water discharge control system. The faucet water discharge control system further includes a temperature control valve assembly including a hot water inlet, a cold water inlet, a mixing chamber and a water outlet. The mixing chamber is connected to the hot water inlet, the cold water inlet and the water outlet respectively. The hot water inlet is provided with a first valve, the cold water inlet is provided with a second valve, and the mixing chamber is provided with a temperature sensor and a third valve. The faucet water discharge control method includes, but is not limited to, the following steps.

In a step of S110, when a water discharge control instruction that includes a target temperature value is received, a target hot water flow rate and a target cold water flow rate are determined based on the target temperature value;
In a step of S 120, the valve opening of the first valve is controlled based on the target hot water flow rate;
In a step of S130, the valve opening of the second valve is controlled based on the target cold water flow rate;
In a step of S140, a reference temperature value sent by the temperature sensor is acquired; and
In a step of S 150: the on/off state of the third valve is controlled based on the target temperature value and the reference temperature value.

It is to be noted that the embodiments of the present disclosure do not limit the specific content of the water discharge control instruction, which may include a target temperature value, or a target water discharge time, or a target water flow rate, etc. The embodiments of the present disclosure further do not limit the specific value of the target temperature value, which may be a preset default temperature value, or a temperature value customized based on actual needs.

It can be understood that when a water discharge control instruction that includes a target temperature value is received, a target hot water flow rate and a target cold water flow rate are determined based on the target temperature value, so that the valve opening of the first valve is controlled based on the target hot water flow rate and the valve opening of the second valve is controlled based on the target cold water flow rate, so that hot water and cold water can be mixed in a certain proportion to reach the target temperature value. A reference temperature value sent by a temperature sensor is acquired, so that the water temperature in the mixing chamber is monitored in real time. The on/off state of the third valve is controlled based on the target temperature value and the reference temperature value, and when the difference between the reference temperature value and the target temperature value is within an error range, the third valve is controlled to be turned on, avoiding excessively hot water discharge and reducing the risk of scalding. Compared with the technical solution in the related art that the inflow time of hot and cold water is controlled based on a preset water temperature value and the hot and cold water flows out directly after being mixed, the reliability of faucet water discharge can be effectively improved.

In addition, referring to FIG. 2, in an embodiment, step S150 in the embodiment shown in FIG. 2 further includes, but is not limited to, the following step.

In a step of S210, the third valve is controlled to be turned off when the reference temperature value is greater than a preset temperature threshold.

It is to be noted that the embodiments of the present disclosure do not limit the specific value of the preset temperature threshold, which may be a default temperature threshold, or a temperature threshold customized according to actual needs.

It can be understood that when the reference temperature value is greater than the preset temperature threshold, it means that the water temperature in the mixing chamber is excessively hot, and the third valve is controlled to be turned off, preventing the high-temperature hot water in the mixing chamber from flowing out, reducing the risk of scalding, thereby effectively improving the reliability of faucet water discharge.

In addition, referring to FIG. 3, in an embodiment, after executing step S210 in the embodiment shown in FIG. 2, the method further includes, but is not limited to the following steps.

In a step of S310, temperature abnormality information is generated based on the reference temperature value; and
In a step of S320, the temperature abnormality information is displayed in a preset application interface.

It is to be noted that the embodiments of the present disclosure do not limit the specific form of the preset application interface, which may be an interface of a display of the faucet water discharge system, or an interface of a terminal APP associated with the faucet water discharge system.

It can be understood that when the reference temperature value is greater than the preset temperature threshold, temperature abnormality information is generated based on the reference temperature value, and the temperature abnormality information is displayed in the preset application interface to promptly remind the user of abnormal water temperature and reduce the risk of scalding.

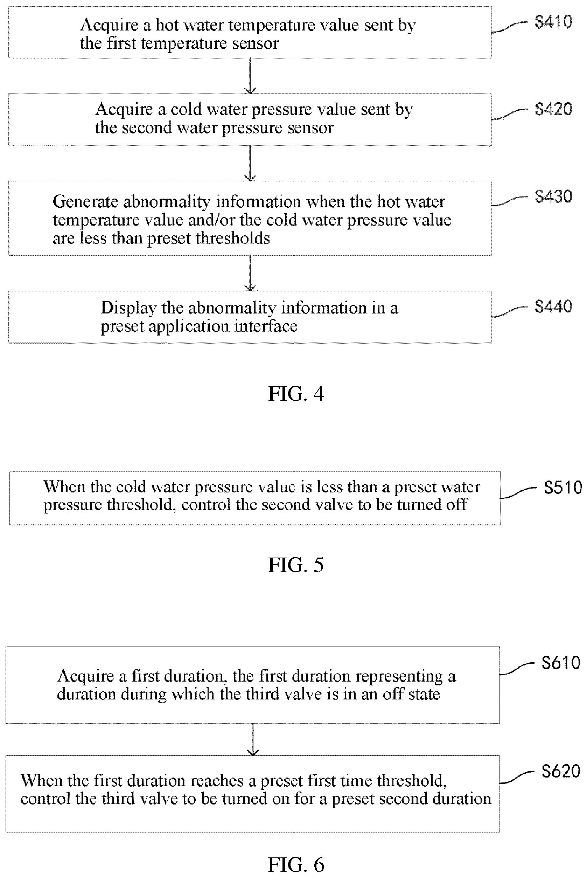

In addition, referring to FIG. 4, in an embodiment, the hot water inlet is further provided with a first temperature sensor, and the cold water inlet is further provided with a second water pressure sensor. The faucet water discharge control method further includes, but is not limited to, the following steps.
In a step of S410, a hot water temperature value sent by the first temperature sensor is acquired;
In a step of S420, a cold water pressure value sent by the second water pressure sensor is acquired;
In a step of S430, abnormality information is generated when the hot water temperature value and/or the cold water pressure value are less than preset thresholds; and
In a step of S440, the abnormality information is displayed in a preset application interface.

It is to be noted that the embodiments of the present disclosure do not limit the specific value of the water pressure threshold, which may be a default water pressure threshold or a water pressure threshold customized based on actual needs.

It can be understood that by acquiring a hot water temperature value sent by the first temperature sensor, the water flow rate of the hot water inlet can be monitored in real time, and by acquiring a cold water pressure value sent by the second water pressure sensor, the water flow rate of the cold water inlet can be monitored in real time. When the hot water temperature value is less than the preset threshold, it means that the hot water flow rate at the hot water inlet is abnormal; when the cold water pressure value is less than the preset water pressure threshold, it means that the cold water flow rate at the cold water inlet is abnormal. When the hot water temperature value and/or cold water pressure value are less than the preset thresholds, abnormality information is generated and then displayed in the preset application interface to facilitate users to promptly discover and repair the failures of the faucet water control system, thereby ensuring the reliability of faucet water discharge.

In addition, referring to FIG. 5, in an embodiment, the faucet water discharge control method further includes, but is not limited to, the following step.

In a step of S510, when the cold water pressure value is less than a preset water pressure threshold, the second valve is controlled to be turned off.

It can be understood that when the cold water pressure value is less than the preset water pressure threshold, it means that the cold water flow rate at the cold water inlet is abnormal, and the second valve is controlled to be turned off so that the hot water in the hot water inlet cannot flow to the mixing chamber, preventing the temperature in the mixing chamber from being too high and reducing the risk of scalding.

In addition, referring to FIG. 6, in an embodiment, the faucet water discharge control method further includes, but is not limited to, the following steps.

In a step of S610, a first duration is acquired, the first duration representing the duration during which the third valve is in an off state; and
In a step of S620, when the first duration reaches a preset first time threshold, the third valve is controlled to be turned on for a preset second duration.

It is to be noted that the present disclosure does not limit the specific value of the preset first time threshold, which may be a default first time threshold, or a first time threshold customized according to actual needs. The present disclosure further does not limit the specific value of the preset second duration, which may be three seconds, or ten seconds, etc.

It can be understood that the first duration, that is, the duration during which the third valve is in an off state is acquired. When the first duration reaches the preset first time threshold, which represents that the water in the mixing chamber is not in use in the time period of the first time threshold, the third valve is controlled to be turned on for a preset second duration to discharge the water in the mixing chamber, preventing water from being retained in the mixing chamber and proliferation of bacteria, and effectively improving the safety of faucet water discharge.

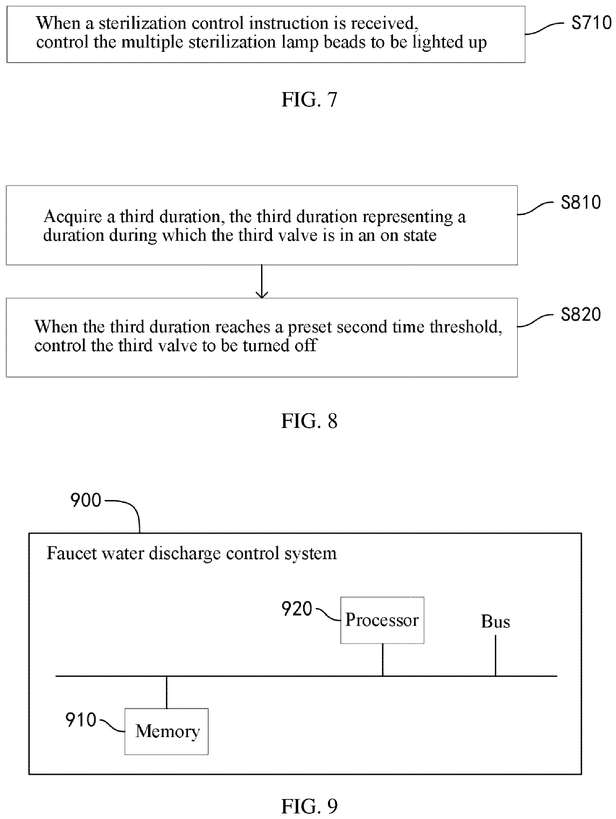

In addition, referring to FIG. 7, in an embodiment, an inner wall of the mixing chamber is provided with multiple sterilization lamp beads. The faucet water discharge control method further includes, but is not limited to, the following step.

In a step of S710, when a sterilization control instruction is received, the multiple sterilization lamp beads are controlled to be lighted up.

It can be understood that when a sterilization control instruction is received, the multiple sterilization lamp beads are controlled to be lighted up, and the mixing chamber can be sterilized and disinfected through the sterilization lamp beads, preventing proliferation of bacteria, improving the quality of the discharged water, thereby effectively improving the safety of faucet water discharge.

In addition, referring to FIG. 8, in an embodiment, the faucet water discharge control method further includes, but is not limited to the following steps.

In a step of S810, a third duration is acquired, the third duration representing the duration during which the third valve is in an on state; and
In a step of S820, when the third duration reaches a preset second time threshold, the third valve is controlled to be turned off.

It is to be noted that the present disclosure does not limit the specific value of the preset second time threshold, which may be a default second time threshold, or a second time threshold customized according to actual needs.

It can be understood that the third duration, that is, the duration during which the third valve is in an on state is acquired. When the third duration reaches the preset second time threshold, which means that the continuous water discharge time has reached the preset second time threshold, the third valve is controlled to be turned off to prevent users from forgetting to turn off the water, resulting in water waste, thereby effectively improving the reliability of faucet water discharge.

In addition, referring to FIG. 9, an embodiment of the present disclosure further provides a faucet water discharge control system 900, including: a memory 910, a processor 920, and a computer program stored in the memory 910 and executable on the processor 920. When the processor 920 executes the computer program, the faucet water discharge control method in the above embodiment is implemented.

The processor 920 and the memory 910 may be connected through a bus or other means.

Non-transient software programs and instructions required to implement the faucet water discharge control method of the above embodiments are stored in the memory 910. When executed by the processor 920, the faucet water discharge control method applied to the control processing module of the faucet water discharge control system in the above embodiments is executed. For example, the above-described method steps S110 to S150 in FIG. 1, method step S210 in FIG. 2, method steps S310 to S320 in FIG. 3, method steps S410 to S440 in FIG. 4, method step S510 in FIG. 5, method steps S610 to S620 in FIG. 6, method step S710 in FIG. 7, and method steps S810 to S820 in FIG. 8 are performed.

The device embodiments described above are merely illustrative, and the units described as separate components may or may not be physically separated, that is, they may be located in one place, or they may be distributed to multiple network units. Some or all of the modules can be selected according to actual needs to achieve the purpose of the solution of this embodiment.

In addition, an embodiment of the present disclosure further provides a computer-readable storage medium that stores computer-executable instructions, and the computer-executable instructions are executed by a processor 920 or a controller, for example, executed by a processor 920 in the above embodiment of the faucet water control system 900, so that the above processor 920 can execute the faucet water control method applied to the control a processing module of the faucet water control system in the above embodiment. For example, the above-described method steps S 110 to S150 in FIG. 1, method step S210 in FIG. 2, method steps S310 to S320 in FIG. 3, method steps S410 to S440 in FIG. 4, method step S510 in FIG. 5, method steps S610 to S620 in FIG. 6, method step S710 in FIG. 7, and method steps S810 to S820 in FIG. 8 are performed.

Those of ordinary skill in the art can understand that all or some steps and systems in the method disclosed above can be implemented as software, firmware, hardware, and appropriate combinations thereof. Some or all of the physical components may be implemented as software executed by processor 920, such as a central processing unit, a digital signal processor, or a microprocessor, or as hardware, or as integrated circuits, such as application specific integrated circuits. Such software may be distributed on computer-readable media, which may include computer storage media (or non-transitory media) and communication media (or transitory media). As is known to those of ordinary skill in the art, the term computer storage media includes volatile and nonvolatile, as well as removable and non-removable media implemented in any method or technology for storage of information (such as computer readable instructions, data structures, program modules or other data). Computer storage media include, but are not limited to, RAM, ROM, EEPROM, flash memory or other memory technology, CD-ROM, Digital Versatile Disk (DVD) or other optical disk storage, magnetic cassettes, tapes, disk storage or other magnetic storage devices, or any other medium that may be used to store the desired information and be accessed by a computer. Additionally, it is known to those of ordinary skill in the art that communication media typically contain computer readable instructions, data structures, program modules or other data in a modulated data signal such as a carrier wave or other transport mechanism, and may include any information delivery medium.

In the description of this specification, reference to the terms "an embodiment", "some embodiments", "illustrative embodiments", "examples", "specific examples", or "some examples" etc. means that the specific features, structures, materials, or characteristics described in conjunction with the embodiment or example are included in at least one embodiment or example of the present disclosure. In this specification, schematic representations of the above terms do not necessarily refer to the same embodiment or example. Furthermore, the specific features, structures, materials or characteristics described may be combined in any suitable manner in any one or more embodiments or examples.

The above is a detailed description of the preferred implementations of the present disclosure, but the present disclosure is not limited to the above embodiments. Those of ordinary skills in the art can further make various equivalent modifications or substitutions without violating the gist of the present disclosure, and these equivalent modifications or substitutions are all included within the scope defined by the claims of the present disclosure.

## Claims

1. A faucet water discharge control method, applied to a control processing module of a faucet water discharge control system, wherein the faucet water discharge control system further comprises a temperature control valve assembly including a hot water inlet, a cold water inlet, a mixing chamber and a water outlet, the mixing chamber is connected to the hot water inlet, the cold water inlet and the water outlet respectively, the hot water inlet is provided with a first valve, the cold water inlet is provided with a second valve, the mixing chamber is provided with a temperature sensor and a third valve, and the faucet water discharge control method comprises:
in response to a water discharge control instruction that comprises a target temperature value being received, determining a target hot water flow rate and a target cold water flow rate based on the target temperature value;
controlling valve opening of the first valve based on the target hot water flow rate;
controlling valve opening of the second valve based on the target cold water flow rate;
acquiring a reference temperature value sent by the temperature sensor; and
controlling on/off state of the third valve based on the target temperature value and the reference temperature value.

2. The faucet water discharge control method according to claim 1, wherein the controlling on/off state of the third valve based on the target temperature value and the reference temperature value comprises:
controlling the third valve to be turned off in response to the reference temperature value being greater than a preset temperature threshold.

3. The faucet water discharge control method according to claim 2, wherein, after controlling the third valve to be turned off in response to the reference temperature value being greater than a preset temperature threshold, the method further comprises:
generating temperature abnormality information based on the reference temperature value; and
displaying the temperature abnormality information in a preset application interface.

4. The faucet water discharge control method according to claim 1, wherein the hot water inlet is further provided with a first temperature sensor, the cold water inlet is further provided with a second water pressure sensor, and the faucet water discharge control method further comprises:
acquiring a hot water temperature value sent by the first temperature sensor;
acquiring a cold water pressure value sent by the second water pressure sensor;
generating abnormality information in response to the hot water temperature value and/or the cold water pressure value being less than preset thresholds; and
displaying the abnormality information in a preset application interface.

5. The faucet water discharge control method according to claim 4, further comprising:
in response to the cold water pressure value being less than a preset water pressure threshold, controlling the second valve to be turned off.

6. The faucet water discharge control method according to claim 1, further comprising:
acquiring a first duration, the first duration representing a duration during which the third valve is in an off state; and
in response to the first duration reaching a preset first time threshold, controlling the third valve to be turned on for a preset second duration.

7. The faucet water discharge control method according to claim 1, wherein an inner wall of the mixing chamber is provided with multiple sterilization lamp beads, and the faucet water discharge control method further comprises:
in response to a sterilization control instruction being received, controlling the multiple sterilization lamp beads to be lighted up.

8. The faucet water discharge control method according to claim 1, further comprising:
acquiring a third duration, the third duration representing a duration during which the third valve is in an on state; and
when the third duration reaches a preset second time threshold, controlling the third valve to be turned off.

9. A faucet water discharge control system, comprising: a memory, a processor, and a computer program stored in the memory and executable on the processor, wherein the computer program, when executed by the processor, causes the processor to implement the faucet water discharge control method according to any one of claims 1 to 8.

10. A computer-readable storage medium, storing computer-executable instructions for causing a computer to execute the faucet water discharge control method according to any one of claims 1 to 8.
